# EUROPÄISCHE PATENTANMELDUNG

(11) **EP 0 800 065 A2**
(43) Veröffentlichungstag der Anmeldung: **08.10.1997**
(21) Anmeldenummer: 97103373.3
(22) Anmeldetag: 28.02.1997
(51) Int. Cl.: G01J 3/18, G02B 6/00

(54) **Vorrichtung zur spektralen Untersuchung von Probenmaterialien**

(30) Priorität: 03.04.1996 DE 29606196 U
(71) Anmelder: BODENSEEWERK PERKIN-ELMER GMBH, D-88662 Überlingen (DE)
(72) Erfinder: Steinwand, Michael, Dr., 88696 Owingen (DE)
(74) Vertreter: Grünecker, Kinkeldey, Stockmair & Schwanhäusser Anwaltssozietät

(57) **Zusammenfassung**

Bei einer Vorrichtung zur spektralen Untersuchung von Probenmaterialien wird eine mit dem Probenmaterial in unmittelbaren Kontakt bringbare Optrodeneinrichtung vorgesehen, die ein für das Probenmaterial charakteristisches Lichtmeßsignal erzeugt. Eine Analyseneinrichtung zur spektralen Analyse des Lichtmeßsignals ist als Mikrospektrometer ausgebildet. Das Mikrospektrometer ist zusammen mit der Optrodeneinrichtung in einer einzigen handhabbaren Geräteeinheit zusammengefaßt.

## Beschreibung

Die Erfindung betrifft eine Vorrichtung zur spektralen Untersuchung von Probenmaterialien, mit einer mit Probenmaterial in unmittelbaren Kontakt bringbaren Optrodeneinrichtung für die Bereitstellung eines für das Probenmaterial charakteristischen Lichtmeßsignals und einer Einrichtung zur spektralen Analyse des Lichtmeßsignals.

Bei spektrometrischen Untersuchungen wird üblicherweise zu untersuchendes Probenmaterial in einen Probenraum eines Spektrometers eingebracht und je nach dem angewendeten Meßprinzip ein spektrometrisch zu zerlegendes Lichtmeßsignal bereitgestellt. Im allgemeinen ist dabei von einem größeren Probenmaterialvorrat eine Probe zu entnehmen und der Meßeinrichtung zuzuführen. Um die letztgenannten Arbeitsgänge zu vermeiden, ist es bekannt, zur Bereitstellung eines Meßlichtsignals Optrodeneinrichtungen zu verwenden, welche in der Lage sind, in direktem Kontakt mit dem Probenmaterialvorrat charakteristische Meßlichtsignale aufzunehmen. Das durch die Optrodeneinrichtungen aufgenommene Licht wird über Lichtleiter einer Spektralanalyseeinrichtung zur Auswertung zugeführt.

Es ist die Aufgabe der vorliegenden Erfindung, eine gegenüber diesem Stand der Technik verbesserte Vorrichtung zur spektralen Untersuchung von Probenmaterialien zu schaffen.

Die diese Aufgabe lösende Vorrichtung nach der Erfindung ist dadurch gekennzeichnet, daß die Analyseeinrichtung als Mikrospektrometer ausgebildet und zusammen mit der Optrodeneinrichtung in einer einzigen, handhabbaren Geräteeinheit zusammengefaßt ist.

Durch diese erfindungsgemäße Lösung können mit der Lichtübertragung durch die Lichtleiter verbundene Störeinflüsse vermieden werden, so daß bei höherer Lichtleistung eine höhere Signalstabilität erreichbar ist. Darüber hinaus kann die erfindungsgemäße Vorrichtung unabhängig von einer stationären Spektralanalyseeinrichtung bequem an jeden Ort, an dem sich ein zu untersuchendes Probenmaterial befindet, transportiert werden.

In einer bevorzugten Ausführungsform der Erfindung umfaßt die Geräteeinheit eine mikromechanische Baueinheit, in der Elemente zur Lichteinkopplung und Lichtleitung, optische Elemente, wie Linsen und Spiegel, Elemente zur Zerlegung von Licht, wie Beugungsgitter, oder/und Lichtdetektoren monolithisch integriert sind.

Durch Verwendung solcher integrierten Baueinheiten lassen sich besonders geringe, eine bequeme Handhabbarkeit des Gerätes gewährleistende Abmessungen erzielen.

Weitere vorteilhafte Ausgestaltungsmöglichkeiten der Erfindung gehen aus den Unteransprüchen hervor.

Die Erfindung soll nun anhand von Ausführungsbeispielen und der beiliegenden, sich auf diese Ausführungsbeispiele beziehenden Zeichnungen näher erläutert und beschrieben werden. Es zeigen:
- Fig. 1: eine erläuternde Darstellung eines herkömmlichen Atomabsorptionsspektrometers mit einer Probenzelle,
- Fig. 2: ein Ausführungsbeispiel für eine Vorrichtung nach der vorliegenden Erfindung,
- Fig. 3: eine Teildarstellung eines eine Strahlungszerlegungseinrichtung und eine Detektionseinrichtung umfassenden Chip-Bauelements, das in einer Vorrichtung nach der vorliegenden Erfindung verwendet werden kann,
- Fig. 4: einen Ausschnitt eines in dem Chip-Bauelement von Fig. 3 verwendeten Stufenreflexionsgitters,
- Fig. 5: einen Ausschnitt einer Auskopplungsstelle auf einer Wellenleiterschicht des Chip-Bauelements von Fig. 3, und
- Fig. 6: einen Ausschnitt, der die Struktur der Wellenleiterschicht des Bauelements von Fig. 3 zeigt.

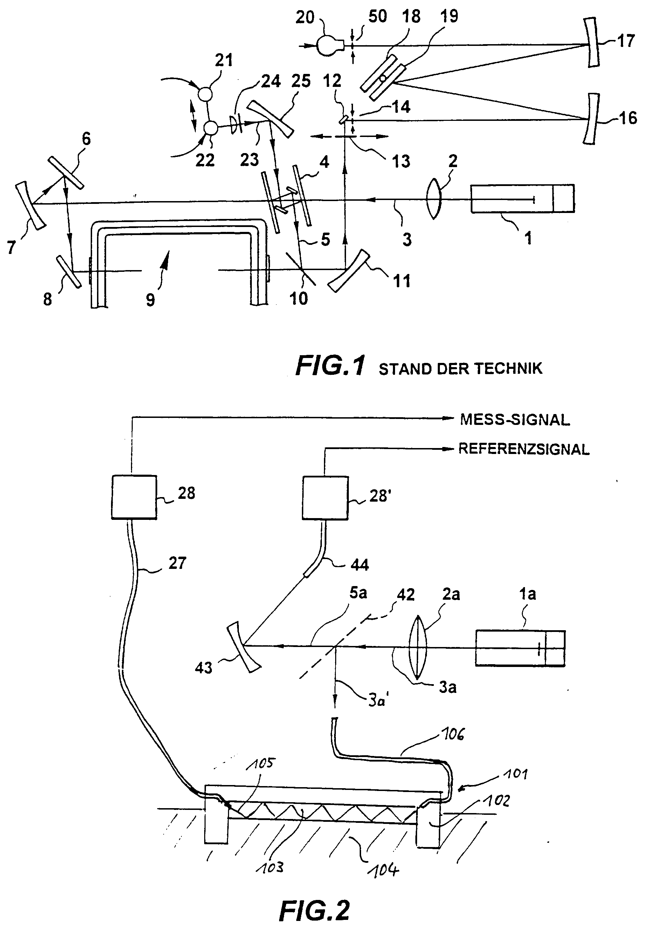

In dem in Fig. 1 gezeigten bekannten Atomabsorptionsspektrometer ist mit dem Bezugszeichen 1 eine Lichtquelle bezeichnet, vor der eine fokussierende Linse 2 zur Bildung eines Lichtstrahls 3 angeordnet ist. Der Lichtstrahl 3 trifft auf eine Chopper-/Ablenkeinrichtung 4, durch die je nach der Chopper-Stellung der Strahl 3 entweder geradlinig hindurchtritt oder zur Bildung eines Referenzstrahls 5 abgelenkt wird. Der unabgelenkte Strahl 3 wird über Umlenkspiegel 6, 7 und 8 in eine für den Lichtstrahl 3 durchlässige Probenzelle 9 geleitet, in der eine zu untersuchende Probe angeordnet werden kann. Der in der Probe teilweise absorbierte Strahl 3 tritt aus der Probenzelle 9 aus und trifft auf einen Strahlvereiniger 10, den er ohne Ablenkung passiert. Durch den Strahlvereiniger 10 wird der Referenzstrahl 5 auf den Strahlweg umgelenkt, welcher dem Strahlweg des Referenzstrahls 3 jenseits des Strahlvereinigers 10 entspricht. Durch die Chopper-/Ablenkeinrichtung 4 wird dafür gesorgt, daß sich auf diesem Strahlweg abwechselnd der durch die Probenzelle 9 und den Strahlvereiniger 10 getretene Meßstrahl 3 und der Referenzstrahl 5 ausbreiten.

Der Meßstrahl oder Referenzstrahl wird durch einen eine fokussierende Reflexionsfläche aufweisenden Spiegel 11 um 90° umgelenkt und erreicht einen weiteren Umlenkspiegel 12, wobei in den Strahlweg zwischen dem Spiegel 11 und dem Spiegel 12 ein Filter 13 einschiebbar ist. Der den Meßstrahl oder Referenzstrahl um 90° ablenkende Spiegel 12 ist unmittelbar vor einem Eintrittsspalt 14 eines Monochromators 15 angeordnet. Der Monochromator weist Reflexionsspiegel 16 sowie drehbare Gitter 18 und 19 auf, wobei ein Gitter im UV-Bereich und das andere Gitter im Bereich des sichtbaren Lichts wirksam ist. Vor einem Austrittsspalt 50 des Monochromators 15 ist ein Lichtdetektor 20, im gezeigten Ausführungsbeispiel ein Fotovervielfacher, angeordnet.

Mit den Bezugszeichen 21 und 22 sind in der Fig. 1 als weitere Lichtquellen eine Halogenlampe und eine D2-Lampe bezeichnet, die wahlweise vor einer einen Lichtstrahl 23 ausblendenden Blende 24 angeordnet werden können. Der Lichtstrahl 23 wird über einen fokussierenden Umlenkspiegel 25 zu der Chopper-/Ablenkeinrichtung 4 geleitet, wo er je nach Stellung des Choppers entweder auf den dem Strahlweg des Lichtstrahls 3 entsprechenden Strahlweg oder den dem Strahlweg des Referenzstrahls 5 entsprechenden Strahlweg abgelenkt wird, so daß auch aus dem Licht der Lichtquelle 21 bzw. 22 jeweils abwechselnd ein Meßstrahl und ein Referenzstrahl gebildet werden kann.

Im Meßbetrieb empfängt der Detektor abwechselnd einen durch die Probe beeinflußten Meßstrahl und einen durch die Probe unbeeinflußten Referenzstrahl, so daß anhand des Referenzstrahls z.B. Intensitätsschwankungen der Lichtquellen eliminiert werden können. Je nach Stellung der drehbaren Gitter 18 und 19 empfängt der Detektor Licht unterschiedlicher Wellenlängenbereiche.

In der eine Vorrichtung nach der Erfindung zeigenden Fig. 2 sind gleiche oder gleichwirkende Teile mit derselben Bezugszahl wie in Fig. 1 bezeichnet, wobei die Bezugszahl jedoch mit dem Buchstaben a versehen ist.

Vor einer Lichtquelle 1a ist eine Fokussierlinse 2a angeordnet, wobei Quelle und Linse einen Lichtstrahl 3a erzeugen. Im Weg des Lichtstrahls 3a ist eine Strahlteiler 42 angeordnet, der den Lichtstrahl 3a in einen Meßlichtstrahl 3a' und einen Referenzstrahl 5a aufteilt.

Der Meßlichtstrahl 3a' ist zur Einspeisung in eine Lichtfaserleitung 106 vorgesehen, die mit einer Optrode 101 verbunden ist. Die Optrode 101 arbeitet in dem gezeigten Ausführungsbeispiel nach dem Prinzip der abgeschwächten Totalreflexion. In einer Halterung 102 ist eine Reflexionsplatte 103 angeordnet, die über die Lichtfaserleitung 106 eingespeistes Licht empfängt. In dem der Einspeisungsstelle des Meßlichtstrahls 3a' gegenüberliegenden Ende der Reflexionsplatte 103 ist eine Einspeisungsstelle eines durch die Optrode beeinflußten Meßlichtstrahls 105 in eine Lichtfaserleitung 27 vorgesehen.

Mit der Bezugszahl 104 ist in Fig. 1 eine Probenflüssigkeit bezeichnet, die im Meßbetrieb eine der beiden Seiten der Reflexionsplatte 103 benetzt.

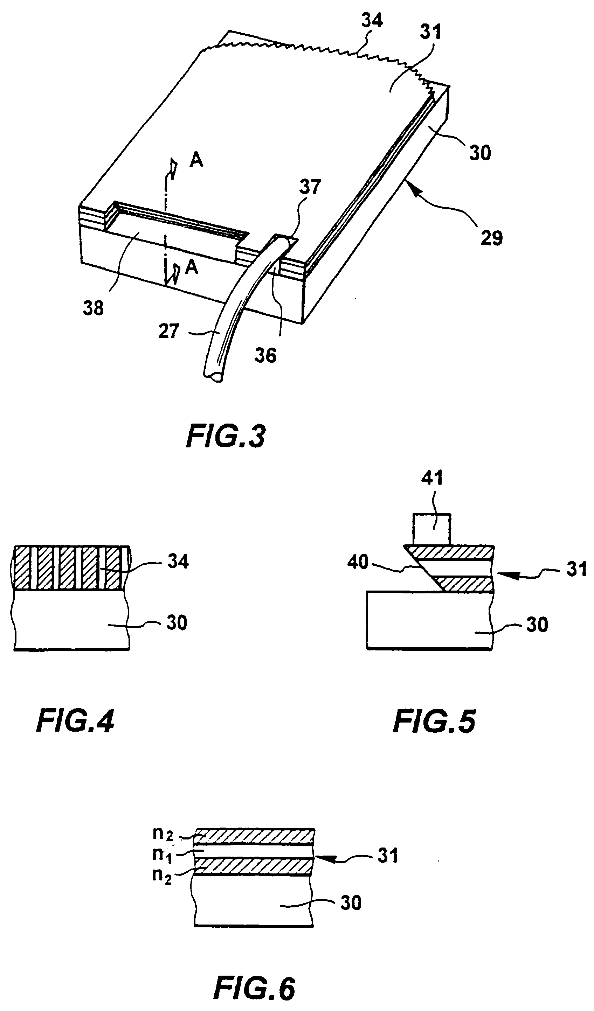

Die Lichtfaserleitung 27 ist mit einer Baueinheit 28 verbunden, welche eine Lichtzerlegungseinrichtung und eine Detektoreinrichtung enthält und genauer anhand der Figuren 3 bis 6 beschrieben ist.

Der Referenzstrahl 5a trifft auf einen Umlenkspiegel 42 auf, durch den er auf eine Eintrittsendfläche einer Lichtfaserleitung 44 fokussiert wird. Die Lichtfaserleitung 44 ist mit einer Baueinheit 28' verbunden, die identisch mit der den Meßstrahl verarbeitenden Baueinheit 28 ist und den in den Figuren 3 bis 6 beschriebenen Chip-Baustein enthält.

Die in der Fig. 2 gezeigten Bauteile sind zu einer einzigen, handhabbaren konstruktiven Einheit zusammengefaßt und insbesondere in einem gemeinsamen Gehäuse untergebracht.

Wie aus der Fig. 3 hervorgeht, ist die Lichtfaserleitung 27 an einen im wesentlichen die Baueinheit 28 bildenden Chip-Baustein 29 angeschlossen. Der Chip-Baustein 29 weist ein Substrat 30 auf, auf dem zur Bildung eines planaren Lichtwellenleiters eine Schicht 31 aufgebracht ist.

Wie insbesondere aus der Fig. 6 hervorgeht, die einen Ausschnitt des Chip-Bausteins 29 zeigt, weist die Schicht 31 drei Lagen auf, wobei die Brechzahl n1 des Materials der mittleren Lage größer als die Brechzahl n2 des Materials der untersten und obersten Lage ist. Bekannterweise kann durch derartige Wahl der Brechzahlen dafür gesorgt werden, daß sich Licht nur innerhalb der mittleren Schicht ausbreitet.

Die Wellenleiterschicht 31 weist an einem Rand eine gestufte, ein Reflexionsgitter bildende Reflexionsendfläche 34 auf. Die ausschnittsweise gesondert in Fig. 4 dargestellte, gestufte Reflexionsendfläche bildet ein selbstfokussierendes Reflexionsgitter.

Mit der Bezugszahl 36 ist in der Fig. 3 eine in der Wellenleiterschicht 31 vorgesehene Ausnehmung bezeichnet, durch die eine ein Ende der Lichtfaserleitung 27 aufnehmende Rille gebildet ist, wobei eine Einspeisung von Licht über die Lichtfaserleitung 27 in die Wellenleiterschicht 31 über eine die Länge der Rille begrenzende Endfläche 37 erfolgt.

In der Wellenleiterschicht 31 ist eine weitere Ausnehmung 38 gebildet, wobei eine Randfläche der Ausnehmung an einem der Reflexionsendfläche 34 gegenüberliegenden Randabschnitt gegen die Oberfläche des Substrats 30 in dem gezeigten Ausführungsbeispiel um 45° geneigt ist. Durch diese Neigung ist, wie insbesondere aus der Abbildung 5, die eine Ansicht gemäß der Schnittlinie A-A von Fig. 3 zeigt, hervorgeht, eine Reflexionsfläche 40 gebildet, die auftreffendes Licht um 90° ablenkt und so aus der Wellenleiterschicht 31 ausblendet.

Wie in der Fig. 5 schematisch angedeutet ist, ist an dem die geneigte Reflexionsfläche 40 aufweisenden Randabschnitt der Wellenleiterschicht 31 eine in der Fig. 3 nicht gezeigte Diodenzeile 41 angeordnet, welche wie die Schicht 31 in den Chip-Baustein 29 von Fig. 3 integriert ist. Die eine Vielzahl einzelner Dioden aufweisende Diodenzeile 41 empfängt entsprechend der unterschiedlichen räumlichen Anordnungen der Dioden in bezug auf die das Gitter bildende Reflexionsendfläche 34 Lichtkomponenten unterschiedlicher Wellenlängen.

Im Meßbetrieb liefert die Kombination aus der Lichtquelle 1a und der Linse 2a den Strahl 3a, der in die Reflexionsplatte 103 eintritt. Der Meßlichtstrahl 3a' wird in der Reflexionsplatte 103 total reflektiert, wobei bestimmte Spektralkomponenten in Abhängigkeit von der Probenflüssigkeit 104 in dem aus der Platte 103 austretenden, in die Lichtfaserleitung 27 eingespeisten Lichtstrahl 105 geschwächt sind. Über die Lichtfaserleitung 27 gelangt das durch die Probe beeinflußte Meßlicht über die durch die Rillenendfläche 37 der Rille 36 gebildete Einkopplungsstelle in die Wellenleiterschicht 31 und breitet sich innerhalb der Wellenleiterschicht 31 bis zur der ein Echelle-Gitter bildenden Reflexionsendfläche 34 aus. An dem Gitter wird das Licht in Komponenten unterschiedlicher Wellenlänge zerlegt, wobei über die in den Bausteinen 29 integrierte Diodenzeile 41 eine Vielzahl von Meßsignalen, die Komponenten des zerlegten Lichts mit unterschiedlichen Wellenlängen entsprechen, abgreifbar ist. Somit können über die Diodenzeile direkt Spektralverteilungen ermittelt werden, ohne daß eine Verstellung eines Gitters erforderlich wäre. Die den durch eine Probe unbeeinflußten Referenzstrahl 5a verarbeitende Baueinheit 28' liefert ein Referenzsignal, durch das z.B. Schwankungen der Intensität der Lichtquelle eliminiert werden können und das zum Vergleich mit dem Meßsignal das volle Spektrum der Lichtquelle wiedergibt.

Die in den Figuren 2 bis 6 beschriebene Vorrichtung läßt sich mit sehr geringen Abmessungen herstellen, so daß entsprechende Analysevorrichtungen leicht handhabbar und mühelos an den Ort des Probenmaterials transportierbar sind.

Über den gezeigten, durch die Bauteile 28 und 28' bestimmten Integrationsgrad hinaus, könnte gegenüber dem beschriebenen Ausführungsbeispiel eine noch weitergehende monolithische Integration von Bauteilen, die Linsen und Spiegel sowie Lichtleiter mit einschließt, vorgesehen sein.

Der anhand der Figuren 3 bis 6 beschriebene Polychromator-Chip-Baustein kann kostengünstig nach den zur Herstellung von integrierten Schaltungen verwendeten Verfahren hergestellt werden, wobei für eine genaue räumliche Zuordnung zwischen dem Gitter und den Detektoren gesorgt werden kann. Bei der Montage des Spektrometers entfallen entsprechende Justierarbeiten. Der Chip-Baustein 29 läßt sich in geringen Abmessungen herstellen. In dem gezeigten Ausführungsbeispiel kann die Grundfläche des Chip-Bausteins in der Größenordnung von 1 - 2 cm² liegen.

## Patentansprüche

1. Vorrichtung zur spektralen Untersuchung von Probenmaterialien, mit:
einer mit Probenmaterial in unmittelbaren Kontakt bringbaren Optrodeneinrichtung (101) für die Bereitstellung eines für das Probenmaterial (104) charakteristischen Lichtmeßsignals (105) und einer Analyseneinrichtung (28) zur spektralen Analyse des Lichtmeßsignals,
**dadurch gekennzeichnet,** daß die Analyseeinrichtung (28, 28') als Mikrospektrometer ausgebildet und zusammen mit der Optrodeneinrichtung (101) in einer einzigen, handhabbaren Geräteeinheit zusammengefaßt ist.

2. Vorrichtung nach Anspruch 1, **dadurch gekennzeichnet,** daß die Geräteeinheit eine mikromechanische Baueinheit (28, 28') aufweist, in der Elemente zur Lichteinkopplung, Elemente zur Lichtleitung, optische Elemente, wie Linsen und Spiegel, Elemente zur spektralen Zerlegung, wie Beugungsgitter, und/oder Lichtdetektoren monolithisch integriert sind.

3. Vorrichtung nach Anspruch 1 oder 2, **dadurch gekennzeichnet,** daß das Mikrospektrometer nach dem Prinzip von Lichtwellenleitern arbeitende Lichtleitungen aufweist.

4. Vorrichtung nach einem der Ansprüche 1 bis 3, **dadurch gekennzeichnet,** daß wenigstens eine Zerlegungseinrichtung und eine Detektoreinrichtung des Mikrospektrometers in einer monolithisch integrierten Chip-Baueinheit (28) zusammengefaßt sind.

5. Vorrichtung nach Anspruch 4, **dadurch gekennzeichnet,** daß zwei solche, jeweils eine Zerlegungs- und Detektoreinrichtung umfassende Chip-Baueinheiten (28, 28') vorgesehen sind, von denen eine Baueinheit (28) für die Erzeugung eines Probensignals und die andere Baueinheit (28') für die Erzeugung eines Referenzsignals vorgesehen ist.

6. Vorrichtung nach Anspruch 5, **dadurch gekennzeichnet,** daß Referenzlicht aus der Strahlung einer Strahlungsquelle (1a) für die Optrodeneinrichtung (101) über einen Strahlteiler (42) ausgekoppelt ist.

7. Vorrichtung nach einem der Ansprüche 4 bis 6, **dadurch gekennzeichnet,** daß die Chip-Baueinheit (28) als Polychromator mit mehreren Detektoren (41) für die Erfassung unterschiedliche Wellenlängen aufweisender Komponenten der durch ihre Zerlegungseinrichtung zerlegten Strahlung ausgebildet ist.

8. Vorrichtung nach einem der Ansprüche 3 bis 7, **dadurch gekennzeichnet,** daß auf einem Substrat (30) eines Chip-Bauelements (29) ein einen planaren Wellenleiter bildende Wellenleiterschicht (31) und ein an einen Rand der Wellenleiterschicht (31) angrenzendes, unter spektraler Zerlegung Strahlung in den Wellenleiter zurückwerfendes Reflexionsgitter (34) angeordnet sind.

9. Vorrichtung nach Anspruch 8, **dadurch gekennzeichnet,** daß die Wellenleiterschicht (31) Ausnehmungen (36, 38) für die Bildung von Strahlungseinkopplungs- (37) oder/und Strahlungsauskopplungsstellen (40) aufweist.

10. Vorrichtung nach Anspruch 9, **dadurch gekennzeichnet,** daß eine rillenförmige Ausnehmung (36) zur Aufnahme eines Faseranschlußkabels (27) für eine Strahlungseinspeisung in die Wellenleiterschicht (31) über eine Rillenendfläche (37) der Ausnehmung (36) und eine Einrichtung (26) für die Einspeisung von aus der Optrodeneinrichtung (109)austretender Strahlung in das Faseranschlußkabel (27) vorgesehen sind.

11. Vorrichtung nach Anspruch 9 oder 10, **dadurch gekennzeichnet,** daß eine oder mehrere Ausnehmungen (38) zur Bildung einer geneigten, Strahlung aus der Wellenleiterschicht (31) ausblendenden Reflexionsfläche (40) vorgesehen sind.

12. Vorrichtung nach Anspruch 11, **dadurch gekennzeichnet,** daß eine oder mehrere, um 45° gegen die Substratoberfläche geneigte Reflexionsflächen (40) vorgesehen sind.

13. Vorrichtung nach einem der Ansprüche 8 bis 12, **dadurch gekennzeichnet,** daß auf der Wellenleiterschicht (39) mehrere Dioden für den Empfang von aus der Wellenleiterschicht (31) ausgeblendeten Strahlungskomponenten unterschiedlicher Wellenlängen gebildet sind.

14. Vorrichtung nach Anspruch 13, **dadurch gekennzeichnet,** daß mehrere Dioden in der Form einer Diodenzeile (41) vorgesehen sind.

15. Vorrichtung nach Anspruch 10 oder 11, **dadurch gekennzeichnet,** daß die Dioden (41) in das Chip-Bauelement (29) integriert sind.

16. Vorrichtung nach einem der Ansprüche 8 bis 15, **dadurch gekennzeichnet,** daß die Wellenleiterschicht (31) drei Schichten umfaßt, wobei die Brechzahl (n1) des Materials der mittleren Schicht größer als die Brechzahl (n2) des Materials der anderen Schichten ist.

17. Vorrichtung nach einem der Ansprüche 8 bis 16, **dadurch gekennzeichnet,** daß das Reflexionsgitter ein Stufengitter (34) ist.

18. Vorrichtung nach Anspruch 17, **dadurch gekennzeichnet,** daß das Stufengitter ein selbstfokussierendes Gitter (34) ist.

19. Vorrichtung nach einem der Ansprüche 1 bis 18, **dadurch gekennzeichnet,** daß die Optrodeneinrichtung eine Immersionstauchoptrode, eine auf geschwächter Totalreflexion beruhende ATR-Optrode (101), eine (externe) Integrationskugel, eine Durchflußoptrode, einen optischen Chemosensor, einen optischen Biosensor oder/und einen integrierten optischen Sensor aufweist.

20. Vorrichtung nach einem der Ansprüche 1 bis 19, **dadurch gekennzeichnet,** daß die Optrodeneinrichtung (101) im nahen ultravioletten und sichtbaren Spektralbereich oder/und im nahen infraroten und infraroten Spektralbereich arbeitet.

21. Vorrichtung nach einem der Ansprüche 1 bis 20, **dadurch gekennzeichnet,** daß die Optrodeneinrichtung zur Bereitstellung des Lichtmeßsignals basierend auf Reflexion, insbesondere gerichteter Reflexion und abgeschwächter Totalreflexion, und/oder Lichtabsorption vorgesehen ist.
